# EUROPÄISCHE PATENTSCHRIFT

(11) **EP 3 048 312 B1**
(45) Veröffentlichungstag und Bekanntmachung des Hinweises auf die Patenterteilung: **27.09.2017**
(21) Anmeldenummer: 16156144.4
(22) Anmeldetag: 24.07.2015
(51) Int. Cl.: F16B 7/18

(54) **VERFAHREN ZUM HERSTELLEN EINER PROFILVERBINDUNG**
METHOD FOR ESTABLISHING A PROFILE CONNECTION
PROCÉDÉ DE CRÉATION D'UNE LIAISON DE PROFILÉS

(30) Priorität: 22.09.2014 DE 202014104524 U
(43) Veröffentlichungstag der Anmeldung: 27.07.2016
(62) Teilanmeldung aus: 15750647.8
(73) Patentinhaber: Flaig, Hartmut, 78554 Aldingen (DE)
(72) Erfinder: Flaig, Hartmut, 78554 Aldingen (DE)
(74) Vertreter: Wagner, Kilian

(56) Entgegenhaltungen:
- DE-U1- 20 302 751
- DE-U1-202004 017 885

## Beschreibung

Die Erfindung betrifft ein Verfahren zum Herstellen einer Profilverbindung gemäß dem Oberbegriff des Anspruchs 1, wobei eine ein Außengewinde aufweisende Verbindungsschraube sowie ein langgestreckter Profilstab, insbesondere ein Strangpressprofil aus einer Leichtmetalllegierung, bevorzugt aus einer Aluminiumlegierung mit mindestens einer sich in Richtung der Längserstreckung des Profilstabes erstreckenden, einen Nutboden aufweisenden, hinterschnittenen Längsnut, deren dem Nutboden in Richtung einer Längsnuthocherstreckung gegenüberliegende Längsnutöffnung senkrecht zur Längserstreckung der Längsnut (und senkrecht zur Längsnuthocherstreckung) von zwei über die Längsnutöffnung beabstandeten Hinterschnittabschnitten begrenzt ist, wobei eine senkrecht zur Längserstreckung der Längsnut (und senkrecht zur Längsnuthocherstreckung) gemessene Längsnutöffnungsbreite geringer ist als eine (in die gleiche Richtung gemessene) maximale Längsnutbreite in einem entlang der Längsnuthocherstreckung gesehen unterhalb der Hinterschnittabschnitte gelegenen Längsnutbereich bereitgestellt werden.

Profilverbindungen, umfassend einen ersten und einen zweiten, jeweils langgestreckten Profilstab aus einer Leichtmetalllegierung, in der Regel eine Aluminiumlegierung, sind hinlänglich bekannt. Dabei kommen in der Regel Gewindehülsen mit Außengewinde zum Einsatz, die in einer hinterschnittenen Längsnut eines der Profilstäbe fixiert werden und in der Regel als Widerlage für einen Schraubkopf einer Verbinderschraube dienen, wobei die Verbinderschraube eine Durchgangsöffnung der Gewindehülse durchsetzt und mit einem Schraubengewinde (Außengewinde) mit einem Gegenlagerstück (Nutstein) verschraubt ist, wobei sich der Nutstein in der Regel in der hinterschnittenen Längsnut des orthogonal zur Längserstreckung der Verbinderschraube verlaufenden Profilstabes befindet.

Lediglich exemplarisch sei an dieser Stelle auf die EP 1 574 725 B1, die EP 0 458 069 B1 und die DE 20 2004 017 885 U1 verwiesen. Sämtliche Druckschriften zeigen unterschiedliche Ausführungsformen von Profilverbindungen.

Aus der DE 203 02 751 U1 ist eine Profilverbindungseinrichtung bekannt, bei der ein Nutstein durch Verdrehen einer Verbinderschraube in einer hinterschnittenen Längsnut eines Profilstabes klemmbar ist. Dabei kann die Ankerschraube mit einer vorderen Spitze in Kontakt mit dem Nutboden der hinterschnittenen Längsnut kommen.

Verbesserungswürdig bei sämtlichen Profilverbindungen ist deren Robustheit bzw. Festigkeit, insbesondere bei Kraftbeaufschlagung senkrecht zur Längserstreckung der zum Einsatz kommenden Verbinderschraube.

Ausgehend von dem vorgenannten Stand der Technik liegt der Erfindung die Aufgabe zugrunde, ein Verfahren zum Herstellen einer Profilverbindung anzugeben, die eine erhöhte Robustheit bzw. Festigkeit, insbesondere bei Kraftbeaufschlagung der senkrecht zur Längserstreckung angeordneten Verbinderschraube aufweist.

Diese Aufgabe wird mit den Merkmalen des Anspruchs 1 gelöst.

Vorteilhafte Ausgestaltungen der Erfindung sind in den Unteransprüchen angegeben. In den Rahmen der Erfindung fallen sämtliche Kombinationen aus zumindest zwei von in der Beschreibung, den Ansprüchen und/oder Figuren offenbarten Merkmalen. Zur Vermeidung von Wiederholungen sollen vorrichtungsgemäß offenbarte Merkmale, insbesondere im Hinblick auf eine mögliche spätere Patentanmeldung als verfahrensgemäß offenbart gelten und beanspruchbar sein. Ebenso sollen verfahrensgemäß offenbarte Merkmale als vorrichtungsgemäß offenbart gelten und beanspruchbar sein.

Die Erfindung betrifft ein Verfahren zum Herstellen einer Profilverbindung. Die mit dem erfindungsgemäßen Verfahren herzustellende Profilverbindung zeichnet sich dadurch aus, dass der den Nutboden der Längsnut bildende und den sich parallel zur Längsnut erstreckenden Längskanal
von der Längsnut beabstandende, als Durchdringungsabschnitt und/oder Einform-Abschnitt ausgebildete Abschnitt von der ein Außengewinde aufweisenden Verbindungsschraube in Richtung der Höhenerstreckung der zugehörigen hinterschnittenen Längsnut durchdrungen, insbesondere durchstanzt, ist oder die Verbindungsschraube in Richtung der Hocherstreckung der zugehörigen hinterschnittenen Längsnut in den Abschnitt eingeformt ist, derart, dass das Profilstabvollmaterial des Abschnitts in den Längskanal hinein deformiert ist. Das Verfahren ist durch folgende Schritte gekennzeichnet ist: Bereitstellen eines nach dem Konzept der Erfindung ausgebildeten Profilstabes sowie einer Verbinderschraube; Verdrehen der Verbinderschraube und dadurch (aufgrund der Gewindesteigung des Verbinderschraubenaußengewindes) Vortreiben der Verbinderschraube in den Durchdringungsabschnitt hinein, wobei gemäß einer ersten Variante das Verschrauben der Verbinderschraube vorzugsweise in einem in der hinterschnittenen Längsnut des Profilstabes aufgenommenen Nutstein erfolgt, wobei durch das Verdrehen und Vortreiben der Schraube eine Öffnung für die Schraube in den Durchdringungsabschnitt geschaffen, insbesondere ausgestanzt wird, wobei die Öffnung bevorzugt als Durchgangsöffnung zum benachbarten Längskanal ausgebildet wird.

Gemäß einer alternativen (zweiten) Verfahrensvariante durchdringt die Verbinderschraube den Abschnitt (Einform-Abschnitt) zwischen der Längsnut und dem Längskanal nicht, sondern verformt lediglich Abschnittsvollmaterial in den Längskanal hinein bzw. bildet eine Vertiefung in den Abschnitt aus. Im Gegensatz zu der ersten Variante wird ein Lochbutzenmaterial nicht entfernt bzw. ausgestanzt, sondern bleibt mit dem benachbarten Profilstabvollmaterial des (Einform-)Abschnittes verbunden.

Der Erfindung liegt der Gedanke zugrunde, den langgestreckten Profilstab, der bevorzugt als ein Strangpressprofil aus einer Leichtmetalllegierung, insbesondere aus einer Aluminiumlegierung ausgebildet ist, in einem Bereich bezogen auf die Längsnuthocherstreckung (gemessen von der Längsnutöffnung bis zum Nutboden) unterhalb des Nutbodens mit einem sich parallel zur Längsnut erstreckenden Längskanal zu versehen, wobei ein den Nutboden der hinterschnittenen Längsnut ausbildender, geschlossener, d.h. aus einem Profilstabvollmaterial ausgebildeter Profilabschnitt als Durchdringungsabschnitt ausgebildet ist, also nur eine so geringe Materialstärke aufweist, dass er mittels einer (nicht zum Profilstab gehörenden) Verbinderschraube, die die Längsnutöffnung der hinterschnittenen Längsnut durchsetzt, zum Herstellen eines Formschlusses mit dem Profilstab in Richtung der (senkrecht zur Nutbreite und senkrecht zur Längserstreckung der Längsnut orientierten) Längsnuthocherstreckung von dieser durchdringbar ist, insbesondere durch Verschrauben der Verbinderschraube in Richtung Längsnutboden bzw. Längsnutboden hindurch. Anders ausgedrückt befindet sich bei einem nach dem Konzept der Erfindung ausgebildeten Profilstab in einem Bereich unterhalb der Längsnut, d.h. weiter als der Längsnutboden von der die Längsnutöffnung aufweisenden Seitenfläche des Profilstabes beabstandet ein Längskanal, der ein Durchdringen bzw. Durchstoßen des den Längskanal von der Längsnut beabstandeten Durchdringungsabschnitts mittels einer Verbinderschraube ermöglicht, insbesondere wenn diese mit einen in der hinterschnittenen Längsnut befindlichen Nutstein (Widerlagerstück) zum Herstellen einer Profilverbindung verschraubt wird, wobei die Verbinderschraube bei diesem Verschrauben in Richtung des Nutbodens der Längsnut und durch diesen hindurch in das Durchdringungsabschnittmaterial (Profilstabvollmaterial) hinein verschraubt wird, wobei es ganz besonders bevorzugt ist, wenn der Durchdringungsabschnitt eine Materialstärke aufweist, die ein zumindest abschnittsweise Durchstanzen des dann bevorzugt als Stanzmembran ausgebildeten Durchdringungsabschnittes durch das vorgenannte Verdrehen der Verbinderschraube ermöglicht, also ein Herausbrechen von Durchdringungsabschnittsmaterial in die Längsnut hinein zur Herstellung einer Öffnung in dem Durchdringungsabschnitt, die die Verbinderschraube umschließt, sodass ein Formschluss zwischen der Verbinderschraube und dem Durchdringungsabschnitt resultiert, mit der Folge, dass verbessert senkrecht zur Längserstreckung der Verbindungsschraube orientierte Belastungen bzw. Kräfte aufgenommen werden können. Bevorzugt ist die Materialstärke des Durchdringungsabschnittes dabei so gewählt, dass eine Verbinderschraube durch Einbringen eines Drehmomentes von Hand, d.h. nicht mit einem automatisierten Werkzeug, ausreicht, um eine bis in die Längsnut hineinreichende Durchdringungsöffnung in den Durchdringungsabschnitt einbringen, insbesondere einstanzen, d.h. ausbrechen zu können. Ein mit einer nach dem Konzept der Erfindung ausgebildeten Profilstab hergestellte Profilverbindung zeichnet sich daher durch eine erhöhte Festigkeit und Robustheit aus.

Unter einem Durchdringen des Durchdringungsabschnittes wird dabei verstanden, dass mittels der Verbinderschraube eine sich bis in die Längsnut hinein erstreckende Öffnung in dem Durchdringungsabschnitt mittels der Verbinderschraube herstellbar ist, wobei bei einer fertigen Profilverbindung die Verbinderschraube in die so hergestellte Öffnung hineinragt, und diese ganz besonders bevorzugt bis in die Längsnut hinein durchsetzt. Bevorzugt wird dabei zunächst von der Verbinderschraube Profilstabmaterial in Richtung der Längsnuthocherstreckung in den Längskanal hineinverformt, wobei bei einem weiteren Verdrehen (Verschrauben) der Verbinderschraube, insbesondere der in einem in der Längsnut aufzunehmenden Nutstein, ein Lochbutzen bzw. Profilstabvollmaterial in einem Bereich unterhalb der Verbindungsschraube von dem restlichen Profilstabvollmaterial des Durchdringungsabschnittes abreißt bzw. losbricht (ausgestanzt wird).

Bei einer alternativen erfindungsgemäßen Ausführungsform des Profilstabes muss der als Vollmaterial ausgebildete Abschnitt nicht zwingend von der Verbindungsschraube durchdrungen werden oder durchdringbar sein - es reicht vielmehr aus, wenn der Nutboden von einem Einform-Abschnitt aus Profilstabvollmaterial gebildet wird bzw. der Längskanal von der Längsnut über ein aus Profilstabvollmaterial ausgebildeten Einform-Abschnitt beabstandet ist, in den zum Herstellen eines Formschlusses mit den Profilstab eine Verbinderschraube in Richtung der Längsnuthocherstreckung (H) einformbar ist, derart, dass das Profilstabvollmaterial des Einform-Abschnitts in den Längskanal verdrängbar (einbeulbar) ist. Im Gegensatz zu der zuvor beschriebenen Ausführungsvariante wird die Verbindungsschraube also nicht vollständig durch den Profilstabvollmaterialabschnitt zwischen der Längsnut und dem Längskanal durchdrungen, sondern lediglich in diesen eingeformt. Auch auf diese Weise ist ein Formschluss herstellbar, wobei im Gegensatz zur ersten Alternative von der Verbindungsschraube keine durchgehende Öffnung in dem vorgenannten Abschnitt gebildet wird, sondern (lediglich) eine geschlossene Vertiefung bzw. Eindellung in Richtung der Längsnuthocherstreckung.

Die Erfindung hat - unabhängig von der Realisierungsform mit Durchdringungs- und/oder Einform-Abschnitt auch den Vorteil, dass eine mit einem derartigen Profilstab hergestellte Profilverbindung auf einfache Weise durch Herausdrehen der mindestens einen Verbinderschraube wieder lösbar ist, wobei sich eine einmal gelöste Profilverbindung einfach wieder herstellen lässt, indem die Verbinderschraube wieder in die ursprüngliche Vertiefung oder Durchgangsöffnung im Abschnitt zwischen der Längsnut und dem Längskanal hinein verstellt wird. Ein erleichtertes Finden der Vertiefung oder Durchgangsöffnung ist, wie später noch erläutert werden wird, durch die Realisierung einer sich vorderseitig verjüngenden Verbinderschraube möglich - hierzu kann beispielsweise im vorderen Abschnitt der Verbinderschraube ein Konusabschnitt realisiert werden.

Besonders bevorzugt ist die Verbinderschraube dabei aus einem Metall ausgebildet, welches härter ist als das Metallmaterial des Profilstabes. Ganz besonders bevorzugt handelt es sich um eine Stahlschraube, die noch weiter bevorzugt durch Kaltfliespressen hergestellt ist. Gegebenenfalls kann die Verbinderschraube, beispielsweise durch einen Vergütungsschritt gehärtet sein.

Im Hinblick auf eine günstige Herstellbarkeit der im Rahmen der Profilverbindung zum Tragen kommenden Verbinderschraube ist es bevorzugt, wenn diese in einem vorderen Bereich aus Vollmaterial ausgebildet ist, also keine stirnseitige (vorderseitige) Vertiefung aufweist. Dabei kann ein vorderer Abschnitt eine Zylinderkontur aufweisen oder im Hinblick auf ein verbessertes bzw. vereinfachtes Wiederfinden einer bereits hergestellten Vertiefung oder Durchgangsöffnung einen Konusabschnitt, wobei durch den Konus gleichzeitig eine verbesserte Zentrierung sowie gegebenenfalls verbesserte Haftkräfte zur Verbesserung der hergestellten Profilverbindung gewährleistet wird. Denkbar sind auch alternative, später noch zu erläuternde Ausführungsformen der Verbinderschraube mit frontseitiger Vertiefung und Ringschneide.

Ganz besonders bevorzugt ist eine Ausführungsform des Profilstabes, bei der dieser nicht nur eine einzige Kombination aus hinterschnittener Längsnut und benachbart dazu angeordneten Längskanal aufweist, die über einen wie zuvor beschriebenen ausgebildeten Durchdringungsabschnitt von der Längsnut beabstandet ist, sondern wenn der Profilstab auf mindestens zwei Seiten eine derartige Kombination aufweist, ganz besonders bevorzugt an sämtlichen vier Seiten, wobei jeweils zwei Seiten, insbesondere Seitenflächen des Profilstabes rechtwinklig zueinander angeordnet sind. Besonders bevorzugt ist eine Ausführungsform des Profilstabes mit einer rechteckigen Kontur, wobei die Ecken des Rechteckes bevorzugt nicht spitz sondern gerundet ausgebildet sind. Besonders bevorzugt ist eine quadratische Querschnittskontur, insbesondere mit gerundeten Ecken.

In Weiterbildung der Erfindung ist mit Vorteil vorgesehen, dass der Durchdringungsabschnitt eine Materialstärke gemessen in Richtung der Längsnuthocherstreckung von weniger als 5mm aufweist, um möglichst leicht bzw. mit begrenztem Kraftaufwand eine Durchgangsöffnung in den Durchdringungsabschnitt durch Verdrehen der Verbinderschraube herstellen zu können. Ganz besonders vorteilhaft hat es sich erwiesen, wenn vorgenannte Materialstärke aus einem Wertebereich zwischen 0,3mm und 4mm, ganz besonders bevorzugt zwischen 0,5mm und 3mm gewählt ist. Optimal scheint eine Materialstärke zwischen 1 mm und 2mm, noch weiter bevorzugt zwischen 1,3mm und 1,8mm zu sein.

Besonders zweckmäßig ist eine Ausführungsform des Profilstabes, bei der der Profilstab einen Zentralkanal aufweist, d.h. einen bezogen auf die Stirnfläche des Profilstabes zentrisch angeordneten und sich in Richtung der Längserstreckung des Profilstabes erstreckenden Kanal, welcher beispielsweise gemäß einer bevorzugten Ausführungsform eine kreisrunde Querschnittskontur aufweist, wobei ebenso eine gezackte Ausführung, d.h. eine Ausführung mit in Umfangsrichtung nebeneinander und sich in radialer Richtung erstreckenden Einbuchtungen bzw. Vertiefungen möglich ist, ebenso wie eine Ausführungsform mit einer kreisringförmigen, bzw. nicht gezackten Hohlzylindermantelflächenkontur.

Im Hinblick auf die konkrete Ausgestaltung des Längskanals gibt es unterschiedliche Möglichkeiten. Bevorzugt ist eine in Richtung der Längsnuthocherstreckung gewählte Höhenerstreckung des Längskanals größer als die Höhenerstreckung "Materialstärke" des Durchdringungsabschnittes in diese Richtung, um eine Wegbewegung bzw. ein Entfernen eines, bevorzugt herausgestanzten bzw. herausgelösten, Vollmaterialabschnittes des Durchdringungsabschnittes zu ermöglichen, welcher bei der Herstellung einer Durchdringungsöffnung in dem Durchdringungsabschnitt mittels der Verbinderschraube resultiert. Auch für den Fall der Realisierung eines Einform-Abschnittes kann es vorteilhaft sein, die Höhenerstreckung des Längskanals größer auszubilden als die Höhenerstreckung "Materialstärke" des Einform-Abschnittes, um somit ein erleichtertes Einformen in den Einformabschnitt bzw. Eindellen des Einform-Abschnittes in den Längskanal hinein zu erleichtern.

Ganz besonders bevorzugt ist es, wenn der Längskanal eine rechteckige Querschnittskontur (mit Blick auf die Stirnseite) aufweist und/oder dass die Querschnittskontur des Längskanals eine geringere Erstreckung in Richtung der Längsnuthocherstreckung als senkrecht dazu aufweist. Bevorzugt ist die Breite des Längskanals größer als seine Höhenerstreckung, wobei die Längskanalbreite bevorzugt zumindest der Breite der Längsnutöffnung entspricht.

Die Erfindung führt auch auf eine Profilverbindung mit mindestens einem nach dem Konzept der Erfindung ausgebildeten Profilstab (erster Profilstab). Die Profilverbindung zeichnet sich gemäß einer ersten Alternative dadurch aus, dass in dem Durchdringungsabschnitt eine Öffnung vorgesehen ist, die eine Verbinderschraube umschließt, wobei bevorzugt die Verbinderschraube bis in den benachbarten Längskanal hineinragt. Die vorgenannte Öffnung bzw. Durchdringungsöffnung ist vorzugsweise mittels der Verbinderschraube hergestellt, wobei weiter bevorzugt die Öffnung zumindest teilweise mittels Stanzen, d.h. Herausbrechen eines Vollmaterialabschnittes durch Durchdringungsabschnittes hergestellt ist, insbesondere indem die Verbinderschraube in Richtung in den Durchdringungsabschnitt durch Verschrauben mit einem Nutstein voran getrieben ist. Im Bereich ihres hinteren Endes weist die Verbinderschraube bevorzugt einen Antrieb, beispielsweise einen Mehrkantantrieb, insbesondere einen Inbusantrieb, oder einen Torxantrieb auf.

Gemäß einer zweiten Alternative ist die Verbinderschraube lediglich in den dann als Einform-Abschnitt dienenden Abschnitt zwischen der Längsnut und dem Längskanal eingeformt, derart, dass Material in den Längskanal eingebeult wird. Mit anderen Worten ist mittels der Verbinderschraube in diesem Fall eine Delle bzw. Verbindung geschaffen, die als Formschlussverbindung dient.

Ganz allgemein ist es grundsätzlich auch möglich für den Fall der Ausbildung des Abschnittes zwischen der Längsnut und dem Längskanal als Durchdringungskanal diesen mittels der Verbinderschraube nicht zu durchdringen, sondern die Verbinderschraube nur derart in den Durchdringungsabschnitt einzuformen, dass ein Lochbutzen nicht ausgestanzt wird, sondern dass lediglich eine Vertiefung im Nutboden der Längsnut resultiert, wobei Durchdringungsabschnittsmaterial in den Längskanal eingedellt bzw. eingeformt ist. Es ist also nicht zwingend notwendig, den Durchdringungsabschnitt mittels der Verbindungsschraube zu durchdringen bzw. Material zur Herstellung einer Durchgangsöffnung auszubrechen bzw. auszustanzen - für eine einfachere Formschlussverbindung kann es ausreichend sein, den Durchdringungsabschnitt lediglich mittels der Verbinderschraube in der Art eines Einform-Abschnittes zu deformieren bzw. mittels der Verbinderschraube eine Vertiefung herzustellen, derart, dass Material des Durchdringungsabschnittes in den benachbarten Längskanal eingeformt bzw. eingedellt ist.

Ganz besonders bevorzugt ist eine Ausführungsform, bei der die Verbinderschraube mit ihrem Außengewinde mit einem in der Längsnut angeordneten Nutstein verschraubt ist, der von der Verbinderschraube in Richtung der Höhenerstreckung der Längsnut durchsetzt ist. Bevorzugt dient dieser Nutstein zur Fixierung einer Verbindung des ersten Profilstabes mit einem weiteren Bauteil, insbesondere einem zweiten, eine hinterschnittene Längsnut aufweisenden Profilstab, der noch weiter bevorzugt nach dem Konzept der Erfindung ausgebildet ist. Anstelle eines zweiten Profilstabes kann auch ein anderes Bauteil, z.B. ein Befestigungswinkel oder ein Scharniergelenk auf die beschriebene Art auf einen ersten Profilstab festgelegt sein bzw. werden. Zur Fixierung des weiteren Bauteils muss nicht zwingend eine von der Verbinderschraube zu durchsetzende Fixierhülse vorgesehen werden - das fixierende Bauteil selbst oder ein weiteres Bauteil kann, insbesondere für den Fall der Realisierung des an dem ersten Profilstabes festzulegenden Bauteils nicht als zweiter Profilstab, von dem zu fixierenden Bauteil gebildet werden. Mit anderen Worten kann sich ein Schraubenkopf der Verbinderschraube an den zu fixierenden Bauteilen mittelbar oder unmittelbar abstützen - eine Fixierhülse, wie diese zum Fixieren eines zweiten Profilstabes von Vorteil ist, muss nicht vorgesehen werden. Ganz besonders bevorzugt weist die Profilverbindung mehrere solcher Verbinderschrauben auf, die bei Bedarf jeweils mit einem eigenen Nutstein in der Längsnut des ersten Profilstabes verschraubt sein können, oder mit einem gemeinsamen Nutstein.

In Weiterbildung der Erfindung ist mit Vorteil vorgesehen, dass, ein hinsichtlich seiner Längserstreckung bevorzugt senkrecht zur Längserstreckung des ersten Profilstabes orientiertes Bauteil, insbesondere ein zweiter Profilstab mit dem ersten Profilstab verbunden ist, wobei die Verbinderschraube zweckmäßigerweise eine in einer hinterschnittenen Längsnut des zweiten Profilstabes angeordnete Fixierhülse durchsetzt, wobei es noch weiter bevorzugt ist, wenn die Verbinderschraube mit einem Schraubenkopf auf einer von dem ersten Profilstab abgewandten Stirnseite der Hülse aufliegt. Bei Bedarf kann das Bauteil mit dem ersten Profilstab über mehrere parallelen, mit einer gemeinsamen oder mit separaten Nutsteinen verschraubten Verbinderschraube verbunden sein, wobei bevorzugt seitliche Verbinder formschlüssig mit dem Durchdringungsabschnitt verbunden sind und diese bevorzugt bis in den Längskanal hinein durchsetzen. Wie erwähnt kann die Verbinderschraube auch nur in den Durchdringungsabschnitt oder alternativ in einen Einform-Abschnitt eingeformt sein, so, dass jedenfalls in dem Vollmaterialabschnitt zwischen der Längsnut und dem Längskanal eine Vertiefung entsteht und das Vollmaterial in den Längskanal hinein deformiert ist.

Als besonders zweckmäßig hat es sich erwiesen, wenn die Verbinderschraube, insbesondere im Bereich eines vorderen, d.h. endseitigen Endes einen Konusabschnitt zum Herstellen der Formschlussverbindung mit dem Durchdringungsabschnitt des ersten Profilstabes aufweist, wobei sich im Rahmen der Profilverbindung die Verbinderschraube mit dem Konusabschnitt am Umfangsrand einer, vorzugsweise mit der Verbinderschraube hergestellten Öffnung im Durchdringungsabschnitt abstützt. Als besonders vorteilhaft hat es sich im Hinblick auf die Realisierung einer besonders festen Verbindung erwiesen, wenn der Konusabschnitt als Morsekonus ausgebildet ist, insbesondere mit einem Konuswinkel (Winkel zwischen der Mantelfläche des Konus und der Längsmittelachse der Schraube von 1,26'). Insgesamt ist es vorteilhaft, wenn der vorgenannte Konuswinkel nicht mehr als 10° beträgt, ganz besonders bevorzugt ist ein Wertebereich zwischen 0,5° und 10° gewählt ist, ganz besonders bevorzugt zwischen 1° und 5°, noch weiter bevorzugt zwischen 1° und 3°. Dabei verjüngt sich der Konusabschnitt in Richtung des vorderen, d.h. in der Einschraubrichtung gelegenen Endes der Verbinderschraube. Hierdurch kann eine zusätzliche Hemmung gegen Herausdrehen der Verbinderschraube erzielt werden. Alternativ ist es auch denkbar anstelle eines Konusabschnitts einfach einen Zylinderabschnitt vorzusehen - ein Konusabschnitt ist zwar grundsätzlich im Hinblick auf das Wiederfinden einer bereits zuvor hergestellten Vertiefung oder Öffnung vorteilhaft - aus Kostengründen kann jedoch auch ein Zylinderabschnitt realisiert werden.

Besonders zweckmäßig ist es, wenn die Verbinderschraube an ihrem vorderen in der Eindrehrichtung gelegenen Ende eine ebene Stirnseite aufweist, d.h. nicht spitz zuläuft, wodurch besonders einfach ein gewünschter (nicht zwingender) Durchstanzeffekt erzielt werden kann. Alternativ weist die Verbinderschraube im Bereich ihres vorderen Endes eine, bevorzugt zylindrische Öffnung auf, die umfangsseitig begrenzt ist von, insbesondere ringförmigen, Einformmitteln zum erleichterten Einformen in den oder Durchdringen des Durchdringungsabschnittes. Ganz besonders bevorzugt sind die Einformmittel derart ausgebildet, dass diese sich in eine gewisse Tiefe beim Verschrauben der Verbinderschraube in den Durchdringungsabschnitt einformen, wobei es gemäß einer ersten Alternative möglich ist, dass die Einformmittel sich bei weiterem Verschrauben der Verbinderschraube bis zum Erreichen des Längskanals einformen und ein herausgelöstes Vollmaterial des Durchdringungsabschnittes in der Öffnung aufgenommen ist. Alternativ ist es realisierbar, dass zumindest ein unterer, d.h. weiter vom Längsnutboden beabstandeter Abschnitt des Durchdringungsabschnittes zur Herstellung der gewünschten Öffnung ausgestanzt ist bzw. wird. Dabei ist es besonders bevorzugt, jedoch nicht zwingend, dass die stirnseitige Öffnung in der Verbinderschraube eine geringere Tiefenerstreckung aufweist als die Materialstärke des Durchdringungsabschnittes gemessen in Richtung der Längsnuthocherstreckung.

Im Hinblick auf die Dimensionierung der Verbinderschraube ist es für den Fall der Realisierung des Abschnittes zwischen der Längsnut und dem Längskanal als Durchdringungsabschnitt von Vorteil, wenn die Länge eines Schraubenschaftes der Verbinderschraube, gemessen von der Unterkante eines Schraubenkopfes bis zum vorderen Ende gleich groß ist oder kleiner als der in Richtung der Hocherstreckung der Längsnut gemessene Abstand zwischen dem Kanalboden und einem Widerlager für den Schraubenkopf, welches bevorzugt von einem von dem ersten Profilstab abgewandten (oberen) Umfangsrand einer Fixierhülse gebildet ist, die bevorzugt in einem zweiten Profilstab aufgenommen ist.

Im Hinblick auf die konkrete Ausgestaltung der Einformmittel gibt es unterschiedliche Möglichkeiten. Bevorzugt sind die Einformmittel als Ringschneide ausgebildet, entweder mit einer geradlinig verlaufenden Schneidkante oder mit einer strukturierten, insbesondere gewellten oder gezahnten Schneidkante.

Für den Fall der Realisierung von Einformmitteln ist es bevorzugt, wenn deren umfangsgeschlossener Wandabschnitt außengewindefrei ausgebildet ist.

Um ein möglichst komfortables bzw. wenig kraftaufwändiges Einformen der Einformmittel in den Abschnitt zwischen Längsnut und Längskanal zu ermöglichen, ist weiterbildungsgemäß vorgesehen, dass der Einform-Abschnitt mit dem größten Teil seiner Axialerstreckung, insbesondere (auch) im Bereich des vorzugsweise vorgesehenen umfangsgeschlossenen Wandabschnitts einen geringeren Durchmesser aufweist, als das Außengewinde des Schaftes, wobei bevorzugt der Außendurchmesser des Einform-Abschnittes den Kerndurchmesser des Außengewindes entspricht.

Eine Erleichterung des Einformens kann zudem dadurch erreicht werden, dass ein radialer Querschnitt des Einformprofils sich in axialer Richtung nach vorne, insbesondere schneidenartig verjüngt, um somit die Flächenpressung im Bereich der Einformkante zu erhöhen. Bei Bedarf kann zumindest der vordere Bereich der Einformmittel gehärtet sein.

Grundsätzlich ist es möglich, dass die Verbinderschraube eine Stift- bzw. Madenform aufweist, d.h. schraubenkopffrei ist. In diesem Fall wird die Verbinderschraube, insbesondere im Rahmen einer Profilverbindung bevorzugt zusammen mit einer Kombination aus einer in einer hinterschnittenen Längsnut eines ersten Profilstabes aufgenommenen Nutstein sowie einer in dem orthogonal dazu angeordneten Profil verankerten Hülse, die dann bevorzugt als Innengewindehülse ausgebildet ist.

Unabhängig von der konkreten Ausgestaltung des vorderen Verbinderschraubenendes ist es bevorzugt, wenn dieses außengewindefrei ausgestaltet ist, wobei grundsätzlich auch eine Ausgestaltung mit Gewinde realisierbar erscheint.

Ganz besonders bevorzugt ist jedoch eine Ausführungsform, bei der die Verbinderschraube einen Schraubenkopf aufweist, mit dem sie sich auf einen Widerlager im Rahmen der Profilverbindung abstützen kann. Dieses Widerlager kann von einer in einem zweiten Profilstab festzulegenden, insbesondere in einer hinterschnittenen Längsnut des zweiten Profilstabes festzulegenden Fixierhülse gebildet sein.

Ganz besonders bevorzugt ist es, dass die Axialerstreckung der stirnseitigen Öffnung mindestens 3mm beträgt und insbesondere aus einem Wertebereich zwischen 3mm und 5mm gewählt ist. Ganz besonders bevorzugt beträgt die Axialerstreckung mindestens 5% der Gesamtaxialerstreckung der Verbinderschraube.

Insbesondere für den Fall, dass von einem zweiten Profilstab unterschiedliche Bauteile an dem ersten Profilstab festgelegt werden sollen, kann das Widerlager mittelbar oder unmittelbar von dem zu befestigenden Bauteil, beispielsweise einem Winkel oder einem Scharnier gebildet sein.

Zusätzlich oder alternativ zu einem zweiten Profilstab ist es möglich, ein hiervon unterschiedliches Bauteil mit dem ersten Profilstab zu verbinden, beispielsweise ein Scharnier oder einen Winkel. Dieser kann mit der Verbindungsschraube in der zuvor beschriebenen Art und Weise am ersten Profilstab festgelegt werden, wobei gemäß einer ersten Alternative die Verbindungsschraube den dann als Durchdringungsabschnitt ausgebildeten Abschnitt zwischen der Längsnut und dem Längskanal durchdringt und gemäß einer alternativen Ausführungsform sich lediglich dann als Einform-Abschnitt ausgebildeten bzw. als Einform-Abschnitt dienenden Abschnitt einformt und Material des Einform-Abschnitts in den Längskanalabschnitt hinein deformiert bzw. einbeult.

Besonders bevorzugt ist es, wenn über das zuvor beschriebene Verfahren ein zweiter, insbesondere nach dem Konzept der Erfindung ausgebildeter Profilstab mit dem ersten Profilstab verbunden wird, wobei in diesem Fall die Verbinderschraube bevorzugt eine in den zweiten Profilstab, genauer einer hinterschnittenen Längsnut des zweiten Profilstabes angeordnete bzw. fixierte Hülse durchsetzt und mit einem in der ersten Längsnut des ersten Profilstabes aufzunehmenden Nutstein in der zuvor beschriebenen Art und Weise verschraubt und dadurch mit dem vorderen Ende der Verbinderschraube eine Durchgangsöffnung in den Durchdringungsabschnitt zum Längskanal hergestellt wird, wobei es besonders zweckmäßig ist, wenn bei der fertig hergestellten Verbinderschraube die Verbinderschraube mit ihrem Außenumfang, insbesondere dem Außenumfang eines fakultativen Konusabschnittes randseitig abgestützt ist in der Öffnung des Durchdringungsabschnittes.

Weitere Vorteile, Merkmale und Einzelheiten der Erfindung ergeben sich aus den der nachfolgenden Beschreibung bevorzugten Ausführungsbeispielen sowie anhand der Zeichnungen.

### Diese zeigen in:

- Fig. 1 und Fig. 2: zwei unterschiedliche, um 90° relativ zueinander verdrehte Ansichten einer Profilverbindung umfassend mindestens einem nach dem Konzept der Erfindung ausgebildeten Profilstab,
- Fig. 3 und Fig. 4: Detailansichten aus den Fig. 1 bzw. 2,
- Fig. 5: einen Stanzabfall, der aus der Herstellung von Durchgangsöffnungen im Durchdringungsabschnitt resultiert,
- Fig. 6: eine mögliche Ausgestaltung einer Verbinderschraube, und
- Fig. 7: eine stark schematisierte Darstellung eines Profilstabes in einer Längsschnittansicht (nur obere Hälfte), wobei hier der Abschnitt zwischen Längsnut und Längskanal als Einform-Abschnitt ausgebildet ist oder nur als Einform-Abschnitt genutzt wird - hier wird kein Vollmaterial des Abschnittes 7 von der Verbinderschraube ausgestanzt, sondern lediglich deformiert in den Längskanal 9 hinein.

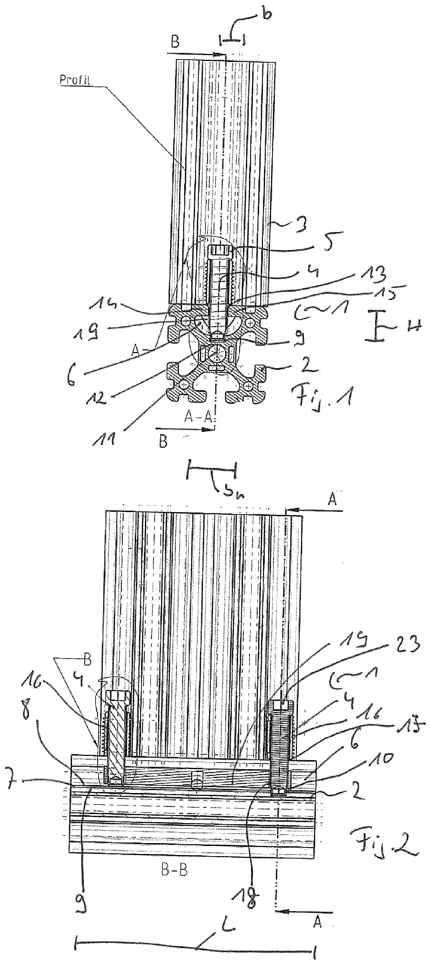

In den Fig. 1 und 2 ist eine Profilverbindung 1 gezeigt, umfassend einen langgestreckten (ersten) Profilstab 2, der in dem gezeigten Ausführungsbeispiel als Strangpressprofil aus einer Aluminiumlegierung ausgebildet ist. Ferner umfasst die Profilverbindung 1 ein Bauteil 3, welches ebenfalls als Profilstab 2 (zweiter Profilstab) ausgebildet ist, der senkrecht zum ersten Profilstab 2 orientiert ist.

Der Profilstab 2 und das Bauteil 3 sind aneinander fixiert mittels einer hier beispielhaft einen Schraubenkopf 5 aufweisenden Verbinderschraube 4.

Diese durchsetzt in Richtung der Hocherstreckung H einer hinterschnittenen Längsnut 6 einen später noch im Detail zu erläuternden Abschnitt 7, der zum einem einen Nutboden 8 der hinterschnittenen Längsnut 6 ausbildet sowie einen unterhalb der hinterschnittenen Längsnut 6 vorgesehenen Längskanal 9 von der hinterschnittenen Längsnut 6 beabstandet. Der Abschnitt 7 kann gemäß einer ersten Alternative als Durchdringungsabschnitt ausgebildet sein, der von einer Verbinderschraube durchdringbar, insbesondere durchstanzbar ist, um somit eine Durchgangsöffnung zwischen Längsnut und Längskanal zu schaffen. Bei nur vergleichsweise leichtem Anziehen der Verbinderschraube ist es möglich, den Durchdringungsabschnitt nicht zu durchstoßen bzw. durchsetzen, sondern lediglich derart einzuformen, sodass eine Vertiefung entsteht und Material des Abschnitts in den Längskanal eingedellt bzw. eingeformt wird. Auch ist es denkbar, nach einer alternativen Ausführungsform, den Abschnitt 7 von vorneherein nicht als Durchdringungsabschnitt auszulegen, sondern lediglich als Einform-Abschnitt, der das Einformen einer Verbinderschraube in Richtung der Hocherstreckung der Längsnut ermöglicht, derart, dass in dem Einform-Abschnitt eine Delle bzw. Vertiefung zur Realisierung des Formschlusses resultiert und Material des Einform-Abschnittes in den Längskanal eingeformt bzw. eingedellt wird.

Aus Fig. 2 rechts ist zu erkennen, dass eine Verbinderschraube 4 (die Profilverbindung 1 enthält hier beispielhaft zwei solcher Verbinderschrauben 4) eine mittels der Verbinderschraube 4 in den Durchdringungsabschnitt 7 eingebrachte Öffnung 10 durchsetzt und in den Längskanal 9 hineinragt. Seitlich stützt sich die Verbinderschraube 4 am Umfangsrand der Öffnung 10 ab, sodass senkrecht zur Längserstreckung des Bauteils 3 orientierte Kräfte optimal aufgenommen werden können.

Zu erkennen ist aus Fig. 1 ferner, dass der (erste) Profilstab 2, betrachtet in der Querschnittsansicht vier identische Seitenflächen aufweist, wobei die Querschnittskontur quadratisch ist. Jeder Seitenfläche ist jeweils eine identisch ausgebildete Kombination aus hinterschnittener Längsnut 6 und über einen hier beispielhaft als Durchdringungsabschnitt ausgebildeten Abschnitt 7 beabstandeten Längskanal 9 zugeordnet.

Aus Fig. 1 ist weiter zu erkennen, dass der Profilstab 2 einen Zentralkanal 11 aufweist, von dem der Längskanal 9 über einen Vollmaterialabschnitt 12 in Richtung der Höhenerstreckung H der hinterschnittenen Längsnut 6 beabstandet ist.

Eine Längsnutöffnung 13 der hinterschnittenen Längsnut wird begrenzt von zwei einander gegenüberliegenden Hinterschnitten 14, 15, die die Breite b der Längsnutöffnung 13 definieren. Eine maximale Längsnutbreite bₙ wird erreicht in einem Bereich unterhalb der Hinterschnitte 14, 15. Die maximale Längsnutbreite bₙ und die senkrecht dazu orientierte Längsnuthöhenerstreckung H sind senkrecht orientiert zur Längserstreckung L (vgl. Fig. 2 des langgestreckten Profilstabes 2).

Aus Fig. 2 ist zu erkennen, dass jede Verbinderschraube 4 eine Hülse 16 durchsetzt und sich mit ihrem Schraubenkopf 5 auf der dem ersten Profilstab 2 abgewandten Seite an der Hülse 16 abstützt. Die Hülse 16 ist beispielsweise mittels eines Außengewindes oder sonstiger, beispielsweise bajonettartiger Fixiermittel in einer hinterschnittenen Längsnut 6 des Bauteils 3 aufgenommen. Die Verbinderschraube 4 durchsetzt jeweils die senkrecht zur Längserstreckung L des Profilstabes 2 orientierte Hülse 16 und ist mit ihrem Außengewinde 17 mit dem Innengewinde 18 eines Nutsteins 19 (Widerlagerstück) verschraubt, der in der hinterschnittenen Längsnut 6 aufgenommen ist. Der Nutstein 19 wird im fertig montierten Zustand (vgl. Fig. 2 rechts) durchsetzt von der Verbinderschraube 4, die zudem in den Abschnitt 7 hineinragt und diesen bevorzugt, wie gezeigt, auch in den Längskanal 9 hinein durchsetzt.

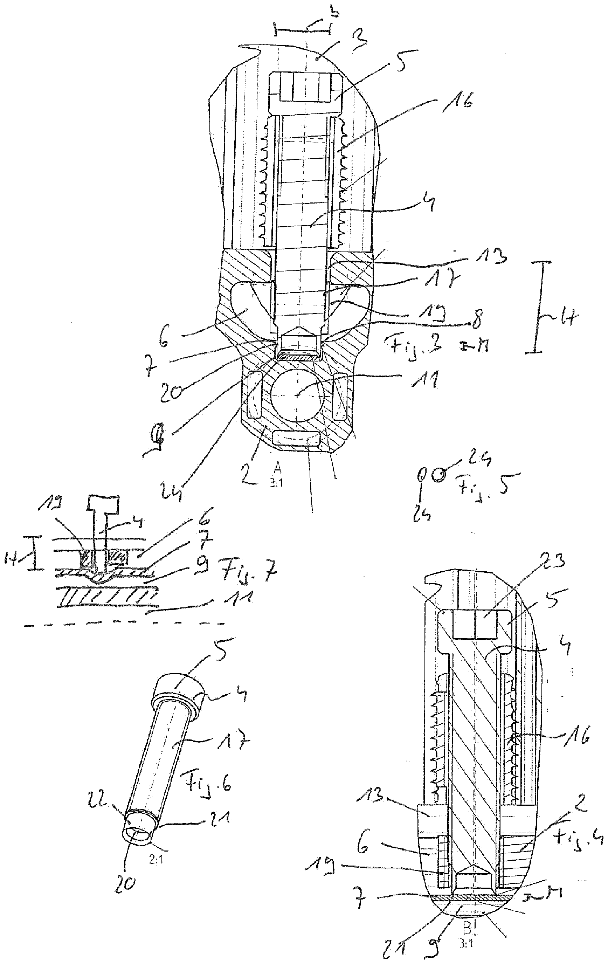

Eine mögliche Ausführungsform der Verbinderschraube 4 ist in Fig. 6 gezeigt. Diese umfasst fakultativ einen Schraubenkopf 5.

Lediglich beispielhaft ist gezeigt, dass in einem vorderen Ende eine Öffnung 20, hier eine Sacklochöffnung vorgesehen ist, die umgeben ist von Einformmitteln 21, hier in Form einer gleichmäßigen Ringschneide, die endseitig einer umfangsgeschlossenen Umfangswand 22 angeordnet ist. Bei einer alternativen Ausführungsform, die vereinfacht fertigbar ist, kann auch ein ebenes vorderes Ende, d.h. ein Ende ohne Öffnung 20 oder mit einer Öffnung 20 mit geringerer Axialerstreckung vorgesehen sein.

In Fig. 6 ist ein dem vorderen Ende gegenüberliegender bzw. von diesem abgewandter Antrieb 23 nicht gezeigt. Dieser ist beispielsweise in Fig. 2 zu erkennen.

Fig. 3 zeigt einen Ausschnitt einer fertigen Verbindung bzw. das Detail aus Fig. 1, welches der rechten Verbinderschraubenverbindung gemäß Fig. 2 entspricht.

Zu erkennen ist die Hülse 16 in der Längsnut 6 im Bauteil 3 (zweiter Profilstab). Diese Hülse 16 ist innengewindefrei ausgebildet. Der Schraubenkopf 5 der Verbinderschraube 4 stützt sich stirnseitig auf der Hülse 16 ab, wobei die Verbinderschraube 4 mit ihrem Außengewinde 17 mit einem Nutstein 19 in der hinterschnittenen Längsnut 6 verschraubt ist. Hierzu durchsetzt die Verbinderschraube 4 die Längsnutöffnung 13. Ferner durchsetzt die Verbinderschraube 4 den Nutstein 19 in Richtung der Hocherstreckung H der hinterschnittenen Längsnut 6 und durchsetzt eine mittels der Verbinderschraube 4 hergestellte Öffnung 20 im Abschnitt 7 bis in den Längskanal 9. Bevorzugt ist also der Abschnitt 7 als durchstanzbare Stanzmembran ausgebildet. Dieser weist in dem gezeigten Ausführungsbeispiel eine Materialstärke M von etwa 1,5mm auf.

Das aus der Einbringung der Öffnung 20 resultierende Abfallstück 24 (Lochbutzen) kann als Stanzabfall bezeichnet werden, da die Öffnung 20 in einem unteren Bereich der Öffnung durch Ausstanzen des Abfallstückes 24 hergestellt ist. Das Abfallstück 24 befindet sich innerhalb des Längskanals 9, in welchem die Verbinderschraube 4 hineinragt. Zu erkennen ist, dass der Abstand zwischen den Zentralkanal 11 und dem Längskanal 9 größer ist als die Materialstärke M des Durchdringungsabschnittes 7. Dies ist jedoch nicht zwingend. Die Breitenerstreckung des eine rechteckige Querschnittskontur aufweisenden Längskanals 9 entspricht näherungsweise der Breite b der Längsnutöffnung 13. Bei einer Ausführungsform mit als Einform-Abschnitt ausgebildetem Abschnitt 7 oder bei nicht fest angezogener Verbinderschraube bei der Realisierung eines Durchdringungsabschnittes anstelle eines Einform-Abschnittes resultiert kein Abfallstück (Lochbutzen) - vielmehr wird in diesem Fall, wie in Fig. 7 gezeigt, lediglich Abschnittmaterial (Vollmaterial) des Abschnittes 7 in den Längskanal 9 hinein deformiert bzw. gebeult.

Fig. 7 zeigt dabei in einer Längsschnittansicht eine obere Hälfte eines ersten Profilstabes, wobei stark schematisiert eine Verbinderschraube 4 gezeigt ist, die analog zu Fig. 3 in einem weiteren Bauteil, insbesondere einem zweiten Profilstab festgelegt sein kann. Die Verbinderschraube durchsetzt einen Nutstein 9 in der hinterschnittenen Längsnut 6. Die Verbinderschraube 4 dellt den Abschnitt 7 ein und zwar in Richtung der Hocherstreckung H der Längsnut 6 in den Längskanal 9 hinein.

Fig. 4 zeigt die Situation links in Fig. 2 in einem vergrößerten Detail. In Fig. 4 ist die Verbinderschraube 4 noch nicht endgültig montiert sondern liegt noch auf dem als Durchdringungsabschnitt ausgebildeten Abschnitt 7, welcher als durchstanzbare Stanzmembran ausgebildet ist, auf. Die Verbinderschraube 4 durchsetzt bereits eine in eine hinterschnittenen Längsnut 6 des Bauteils 3 (zweiter Profilstab) aufgenommene Hülse 16 in Richtung der Hocherstreckung H der hinterschnittenen Längsnut 6 des ersten Profilstabes 2 und ist im Inneren des hinterschnittenen Längskanals 6 mit dem Nutstein 19 verschraubt und durchsetzt diesen Bereich, sodass ein vorderes Ende der Verbinderschraube 4, welches hier beispielhaft mit Einformmitteln 21 (fakultativ) versehen ist an den Durchdringungsabschnitt 7 ansteht. Durch Verdrehen der Verbinderschraube 4 in Umfangsrichtung wird diese in Richtung der Längsnuthocherstreckung H vorgetrieben in das Vollmaterial des Durchdringungsabschnittes 7 hinein und derart, dass der in Fig. 5 dargestellte Stanzabfall resultiert, der dann in den benachbarten Längskanal 9 hineinfällt.

### Bezugszeichenliste

- 1: Profilverbindung
- 2: Profilstab
- 3: Bauteil
- 4: Verbinderschraube
- 5: Schraubenkopf
- 6: hinterschnittene Längsnut
- 7: Abschnitt
- 8: Nutboden
- 9: Längskanal
- 10: Öffnung
- 11: Zentralkanal
- 12: Vollmaterialabschnitt
- 13: Längsnutöffnung
- 14: Hinterschnitt
- 15: Hinterschnitt
- 16: Hülse
- 17: Außengewinde
- 18: Innengewinde
- 19: Nutstein
- 20: Öffnung (Durchdringungsabschnittsöffnung)
- 21: Einformmittel
- 22: Umfangswand
- 23: Antrieb der Verbinderschraube
- 24: Abfallstück
- H: Hocherstreckungsrichtung der hinterschnittenen Längsnut
- b: Längsnutöffnungsbreite
- bₙ: maximale Längsnutbreite
- L: Längserstreckung der hinterschnittenen Längsnut
- M: Materialstärke des Durchdringungsabschnittes

## Patentansprüche

1. Verfahren zum Herstellen einer Profilverbindung, wobei eine ein Außengewinde (17) aufweisende Verbinderschraube (4) bereitgestellt wird sowie ein erster Profilstab (2), insbesondere ein Strangpressprofil aus einer Leichtmetalllegierung, bevorzugt aus einer Aluminiumlegierung, mit mindestens einer sich in Richtung der Längserstreckung (L) des Profilstabes (2) erstreckenden, einen Nutboden (8) aufweisenden, hinterschnittenen Längsnut (6), deren dem Nutboden (8) in Richtung einer Längsnuthocherstreckung (H) gegenüberliegende Längsnutöffnung (13) senkrecht zur Längserstreckung (L) der Längsnut (6) von zwei über die Längsnutöffnung (13) beabstandeten Hinterschnittabschnitten (14, 15) begrenzt ist, wobei eine senkrecht zur Längserstreckung (L) der Längsnut (6) gemessene Längsnutöffnungsbreite (b) geringer ist als eine maximale Längsnutbreite (bₙ) in einem entlang der Längsnuthocherstreckung (H) gesehen unterhalb der Hinterschnittabschnitte (14, 15) gelegenen Längsnutbereich,
**dadurch gekennzeichnet,**
**dass** zwischen der Verbinderschraube (4) und dem ersten Profilstab (2) ein Formschluss hergestellt wird, indem die Verbinderschraube (4) verdreht und dadurch aufgrund der Gewindesteigung des Außengewindes (17) der Verbinderschraube (4) in einen als Durchdringungsabschnitt und/oder Einform-Abschnitt ausgebildeten Abschnitt (7) aus Profilstabvollmaterial hinein vorgetrieben wird, der einen unterhalb des Nutbodens (8) angeordneten sich parallel zur Längsnut (6) erstreckenden Längskanal (9) von der Längsnut (6) beabstandet und den Nutboden (8) ausbildet, derart, dass der Abschnitt (7) von der Verbinderschraube (4) unter Schaffung einer Öffnung für die Verbinderschraube (4) in Richtung der Längsnuterstreckung (H) durchdrungen, insbesondere durchgestanzt wird,
und/oder
derart, dass die Verbinderschraube (4) in Richtung der Längsnuthocherstreckung (H) in den Abschnitt (7) derart eingeformt wird, dass Profilstabvollmaterial des Einform-Abschnitts (2) in den Längskanal (9) verdrängt wird.

2. Verfahren nach Anspruch 1,
**dadurch gekennzeichnet,**
**dass** der, vorzugsweise als Stanzmembran ausgebildete, Abschnitt (7) der von der Verbinderschraube (4) durchdrungen wird oder in den die Verbinderschraube (4) eingeformt wird, eine Materialstärke gemessen in Richtung der Längsnuthocherstreckung (H) von weniger als 5mm, vorzugsweise aus einem Wertebereich zwischen 0,3mm und 4mm, bevorzugt zwischen 0,5mm und 3mm, ganz besonders bevorzugt zwischen 1 mm und 2mm, noch weiter bevorzugt zwischen 1,3mm und 1,8mm aufweist.

3. Verfahren nach einem der Ansprüche 1 oder 2,
**dadurch gekennzeichnet,**
**dass** die Längsnut (6) in Richtung der Längsnuthocherstreckung (H), vorzugsweise über einen Vollmaterialabschnitt (12), beabstandet ist von einem sich in Richtung der Längserstreckung (L) des Profilstabes (2) erstreckenden Zentralkanal (11) des Profilstabes (2), wobei vorzugsweise die Materialstärke (M) des Abschnittes (7) gemessen in Richtung der Längsnuthocherstreckung (H) geringer ist als der Abstand zwischen dem Längskanal (9) und dem Zentralkanal (11), gemessen in Richtung der Längsnuthocherstreckung (H).

4. Verfahren nach einem der vorhergehenden Ansprüche,
**dadurch gekennzeichnet,**
**dass** der Längskanal (9) eine rechteckige Querschnittskontur und/oder dass die Querschnittskontur des Längskanals (9) eine geringere Erstreckung in Richtung der Längsnuthocherstreckung (H) als senkrecht aufweist.

5. Verfahren nach einem der vorhergehenden Ansprüche,
**dadurch gekennzeichnet,**
**dass** der erste Profilstab (2) vier Seitenflächen aufweist, wobei jeweils zwei benachbarte der Seitenflächen rechtwinklig zueinander angeordnet sind und dass an mindestens zwei, insbesondere an allen vier, Seitenflächen eine hinterschnittene Längsnut (6) mit zugeordnetem Längskanal (9) sowie zwischen Längsnut (6) und Längskanal (9) angeordnetem Abschnitt (7), bevorzugt in einer Ausgestaltung nach einem der vorhergehenden Ansprüche, vorgesehen ist.

6. Verfahren nach einem der vorhergehenden Ansprüche,
**dadurch gekennzeichnet,**
**dass** die Verbinderschraube (4) mit ihrem Außengewinde (17) mit einem in der Längsnut (6) angeordneten Nutstein (19) verschraubt wird, der von der Verbinderschraube (4) in Richtung der Höhenerstreckung (H) der Längsnut (6) durchsetzt wird.

7. Verfahren nach einem der vorhergehenden Ansprüche,
**dadurch gekennzeichnet,**
**dass** mittels der Verbinderschraube (4) ein Bauteil (3), insbesondere ein eine hinterschnittene Längsnut (6) aufweisender zweiter Profilstab, bevorzugt rechtwinklig zum ersten Profilstab (2), oder ein Winkelbauteil oder ein Scharnierbauteil an dem ersten Profilstab (2) festgelegt wird.

8. Verfahren nach Anspruch 7,
**dadurch gekennzeichnet,**
**dass** die Verbinderschraube (4) eine in der Längsnut (6) des zweiten Profilstabes (2) fixierte Hülse (16) durchsetzend angeordnet ist.

9. Verfahren nach einem der Ansprüche 5 bis 8,
**dadurch gekennzeichnet,**
**dass** die Verbinderschraube (4) einen, vorzugsweise endseitigen, bevorzugt als Morsekonus ausgebildeten, Konusabschnitt, bevorzugt mit einem Konuswinkel zwischen der Längsmittelachse der Schraube und der Konusmantelfläche aus einem Wertebereich zwischen 0,5° und 10°, bevorzugt zwischen 1° und 5°, noch weiter bevorzugt zwischen 1° und 3° aufweist, mit dem die Verbindungsschraube seitlich an einem Umfangsrand einer, vorzugsweise mittels der Verbinderschraube (4), bevorzugt durch Ausstanzen, hergestellten Öffnung (20) oder Vertiefung im Abschnitt (7) abgestützt wird.

10. Verfahren nach einem der Ansprüche 5 bis 9,
**dadurch gekennzeichnet,**
**dass** die Verbinderschraube (4) an ihrem vorderen Ende eine ebene Stirnseite zum Einformen und/oder Durchdringen, insbesondere Durchstanzen, des Abschnittes (7) aufweist oder dass die Verbinderschraube (4) im Bereich ihres vorderen Endes eine stirnseitige, bevorzugt zylindrische, Öffnung (20) aufweist, die umfangsseitig begrenzt ist von, insbesondere ringförmigen Einformmitteln (21) zum erleichterten Einformen in den und/oder Durchdringen des Abschnittes (7).

11. Verfahren nach Anspruch 10,
**dadurch gekennzeichnet,**
**dass** die Einformmittel (21) als Ringschneide ausgebildet sind, vorzugsweise mit einer in einer in einer Ebene, vorzugsweise einer Radialebene bezogen auf die Längserstreckung (L) der Verbinderschraube (4), oder dass die Ringschneide ein Wellen- oder Sägezahnprofil aufweist.

## Claims

1. Method for establishing a profile connection, wherein a connection screw (4) comprising a male thread (17) as well as a profile bar (2), in particular an extrusion profile of a light metal alloy, preferably an aluminum alloy, are provided, having an undercut longitudinal groove (6) extending in the direction of the longitudinal extension (L) of the profile bar (2) and comprising a groove bottom (8), the longitudinal grove opening (13) of which longitudinal grove located opposite the groove bottom (8) in the direction of a longitudinal groove height extension (H) is limited by two undercut sections (14, 15) spaced via the longitudinal groove opening (13) perpendicularly to the longitudinal extension (L) of the longitudinal groove (6), wherein a longitudinal grove opening width (b) measured perpendicular to the longitudinal extension (L) of the longitudinal groove (6) is smaller than a maximum longitudinal groove width (bₙ) in a longitudinal groove region located below the undercut sections (14, 15) when viewed along the longitudinal groove height extension (H),
**characterized in that**
a form-fit is established between the connection screw (4) and the first profile bar (2) **in that** the connection screw (4) is rotated and thereby advanced into a section (7) of profile bar solid material formed as a penetration section and/or forming section due to the thread pitch of the male thread (17) of the connection screw (4), this section (7) forming a longitudinal channel (9), which is spaced from the longitudinal groove (6) and arranged below the groove bottom (8) and extending parallel to the longitudinal groove (6), as well as a groove bottom (8) in such a way that the section (7) is being penetrated, in particular punched through, by the connection screw (4) along with the provision of an opening for the connection screw (4) in the direction of the longitudinal groove extension (H),
and/or
in such a way that the connection screw (4) is being formed in the direction of the longitudinal groove extension (H) into the section (7) in such a way that the profile bar solid material of the forming section (2) is being displaced into the longitudinal channel (9).

2. Method according to claim 1,
**characterized in that**
the section (7), which is preferably formed as a punch membrane and penetrated by the connection screw (4) or into which the connection screw (4) is formed, has a material thickness of less than 5 mm, preferably from a value range between 0.3 mm and 4 mm, preferably between 0.5 mm and 3 mm, very particularly preferred between 1 mm and 2 mm, even more preferred between 1.3 mm and 1.8 mm, measured in the direction of the longitudinal groove height extension (H).

3. Method according to one of claims 1 or 2,
**characterized in that**
the longitudinal groove (6) in the direction of the longitudinal groove height extension (H), preferably via a solid material section (12) is spaced from a central channel (11) of the profile bar (2) extending in the direction of the longitudinal extension (L) of the profile bar (2), wherein preferably the material thickness (M) of the section (7) measured in the direction of the longitudinal groove height extension (H) is smaller than the distance between the longitudinal channel (9) and the central channel (11), measured in the direction of the longitudinal groove height extension (H).

4. Method according to one of the preceding claims,
**characterized in that**
the longitudinal channel (9) has a rectangular cross-sectional contour and/or **in that** the cross-sectional contour of the longitudinal channel (9) has a lower extension in the direction of the longitudinal groove height extension (H) than perpendicularly.

5. Method according to one of the preceding claims,
**characterized in that**
the first profile bar (2) comprises four side surfaces, with in each case two neighboring side surfaces being arranged at a right angle to one another, and **in that** an undercut longitudinal groove (6) having an assigned longitudinal channel (9) is provided on at least two, in particular all four side surfaces as well as section (7) arranged between longitudinal groove (6) and longitudinal channel (9), preferably in a configuration according to one of the preceding claims.

6. Method according to one of the preceding claims,
**characterized in that**
the connection screw (4) is screwed with its male thread (17) having a sliding block (19) arranged in the longitudinal groove (6), which is penetrated by the connection screw (4) in the direction of the height extension (H) of the longitudinal groove (6).

7. Method according to one of the preceding claims,
**characterized in that**
a component (3), in particular a second profile bar comprising an undercut longitudinal groove (6), preferably at a right angle to the first profile bar (2), or an angled component or a hinge component is secured to the first profile bar (2) by means of the connection screw (4).

8. Method according to claim 7,
**characterized in that**
the connection screw (4) is arranged as to penetrate a sleeve (16) fixed in the longitudinal groove (6) of the second profile bar (2).

9. Method according to one of claims 5 to 8,
**characterized in that**
the connection screw (4) has a preferably end-sided cone section which is preferably formed as a morse taper, preferably with a cone angle between the longitudinal central axis of the screw and the cone shell from a value range between 0.5° and 10°, preferably between 1° and 5°, even further preferred between 1° and 3°, by means of which the connection screw is laterally supported at a circumferential edge of an opening (20) or depression in the section (7) that is produced preferably by means of the connection screw (4), preferably by punching.

10. Method according to one of claims 5 to 9,
**characterized in that**
the connection screw (4) comprises, at its front end, a flat face side for forming-in and/or penetrating, in particular punching, the section (7), or **in that** the connection screw (4) comprises a face-sided preferably cylindrical opening (20) in the region of its front end, which is circumferentially limited by in particular annular forming means (21) for a simplified forming into and/or penetration of the section (7).

11. Method according to claim 10,
**characterized in that**
the forming means (21) are formed as an annular cutting edge, preferably with a in a plane, preferably a radial plane with respect to longitudinal extension (L) of the connection screw (4), or **in that** the annular cutting edge comprises a wave or saw tooth profile.

## Revendications

1. Procédé pour créer une liaison de profilés, dans lequel est prévue une vis de liaison (4) présentant un filetage extérieur (17) ainsi qu'une première barre profilée (2), en particulier un profilé filé constitué d'un alliage de métal léger, de préférence constitué d'un alliage d'aluminium, avec au moins une rainure longitudinale en contre-dépouille (6) présentant un fond de rainure (8), s'étendant dans la direction de l'étendue longitudinale (L) de la barre profilée (2), dont l'ouverture de rainure longitudinale (13) opposée au fond de rainure (8) dans la direction d'une étendue en hauteur de la rainure longitudinale (H) est limitée perpendiculairement à l'étendue longitudinale (L) de la rainure longitudinale (6) par deux portions en contre-dépouille (14, 15) espacées par le biais de l'ouverture de rainure longitudinale (13), une largeur d'ouverture de rainure longitudinale (b), mesurée perpendiculairement à l'étendue longitudinale (L) de la rainure longitudinale (6), étant inférieure à une largeur maximale de rainure longitudinale (bₙ) dans une région de rainure longitudinale, vue le long de l'étendue en hauteur de la rainure longitudinale (H), située en dessous des portions en contre-dépouille (14, 15),
**caractérisé en ce que**
entre la vis de liaison (4) et la première barre profilée (2) est établi un engagement par correspondance de formes, par rotation de la vis de liaison (4), et de ce fait, en raison du pas de vis du filetage extérieur (17) de la vis de liaison (4), par sa pénétration dans une portion (7) constituée d'un matériau massif de barre profilée, réalisée sous forme de portion de perçage et/ou de portion de formage, qui constitue un canal longitudinal (9) disposé en dessous du fond de rainure (8) et s'étendant parallèlement à la rainure longitudinale (6), espacé de la rainure longitudinale (6), ainsi que le fond de rainure (8), de telle sorte que la portion (7) de la vis de liaison (4) soit percée, en particulier soit perforée, dans la direction de l'étendue de rainure longitudinale (H), en créant une ouverture pour la vis de liaison (4),
et/ou
de telle sorte que la vis de liaison (4) soit formée dans la direction de l'étendue en hauteur de la rainure longitudinale (H) dans la portion (7) de telle sorte que le matériau massif de barre profilée de la portion formée (2) soit repoussé dans le canal longitudinal (9).

2. Procédé selon la revendication 1, **caractérisé en ce que**
la portion (7) réalisée de préférence sous forme de membrane perforée, qui est percée par la vis de liaison (4) ou dans laquelle est formée la vis de liaison (4), présente une épaisseur de matériau mesurée dans la direction de l'étendue en hauteur de la rainure de longitudinale (H) inférieure à 5 mm, de préférence dans une plage de valeurs comprise entre 0,3 mm et 4 mm, préférablement entre 0,5 mm et 3 mm, particulièrement préférablement entre 1 mm et 2 mm, encore plus préférablement entre 1,3 mm et 1,8 mm.

3. Procédé selon l'une quelconque des revendications 1 ou 2,
**caractérisé en ce que**
la rainure longitudinale (6), dans la direction de l'étendue en hauteur de la rainure longitudinale (H), de préférence sur une portion de matériau massif (12), est espacée d'un canal central (11) de la barre profilée (2) s'étendant la direction de l'étendue longitudinale (L) de la barre profilée (2), de préférence l'épaisseur de matériau (M) de la portion (7), mesurée dans la direction de l'étendue en hauteur de la rainure longitudinale (H), étant inférieure à la distance entre le canal longitudinal (9) et le canal central (11), mesurée dans la direction de l'étendue en hauteur de la rainure longitudinale (H).

4. Procédé selon l'une quelconque des revendications précédentes,
**caractérisé en ce que**
le canal longitudinal (9) présente un contour en section transversale rectangulaire et/ou **en ce que** le contour en section transversale du canal longitudinal (9) présente une étendue dans la direction de l'étendue en hauteur de la rainure longitudinale (H) qui est inférieure à l'étendue dans la direction verticale.

5. Procédé selon l'une quelconque des revendications précédentes,
**caractérisé en ce que**
la première barre profilée (2) présente quatre surfaces latérales, à chaque fois deux surfaces latérales adjacentes étant disposées à angle droit l'une par rapport à l'autre et **en ce qu'**une rainure longitudinale en contre-dépouille (6) avec un canal longitudinal associé (9), ainsi qu'une portion (7) disposée entre la rainure longitudinale (6) et le canal longitudinal (9), sont prévues au niveau d'au moins deux, en particulier au niveau des quatre surfaces latérales, de préférence avec une configuration selon l'une quelconque des revendications précédentes.

6. Procédé selon l'une quelconque des revendications précédentes,
**caractérisé en ce que**
la vis de liaison (4) est vissée avec son filetage extérieur (17) avec un coulisseau (19) disposé dans la rainure longitudinale (6), lequel est traversé par la vis de liaison (4) dans la direction de l'étendue en hauteur (H) de la rainure longitudinale (6).

7. Procédé selon l'une quelconque des revendications précédentes,
**caractérisé en ce**
**qu'**un composant (3), en particulier une deuxième barre profilée présentant une rainure longitudinale (6) en contre-dépouille, de préférence perpendiculairement à la première barre profilée (2), ou un composant coudé ou un composant de charnière, est fixé au moyen de la vis de liaison (4) à la première barre profilée (2).

8. Procédé selon la revendication 7,
**caractérisé en ce que**
la vis de liaison (4) est disposée de manière à traverser une douille (16) fixée dans la rainure longitudinale (6) de la deuxième barre profilée (2).

9. Procédé selon l'une quelconque des revendications 5 à 8,
**caractérisé en ce que**
la vis de liaison (4) présente une portion conique, de préférence du côté de l'extrémité, de préférence réalisée sous forme de cône Morse, de préférence avec un angle de conicité entre l'axe médian longitudinal de la vis et la surface d'enveloppe du cône dans une plage de valeurs comprise entre 0,5° et 10°, de préférence entre 1° et 5°, encore plus préférablement entre 1° et 3°, avec laquelle la vis de liaison est supportée latéralement sur un bord périphérique d'une ouverture (20) ou d'un renfoncement dans la portion (7), fabriqué(e) de préférence au moyen de la vis de liaison (4), de préférence par estampage.

10. Procédé selon l'une quelconque des revendications 5 à 9,
**caractérisé en ce que**
la vis de liaison (4) présente, au niveau de son extrémité avant, un côté frontal plan pour le formage et/ou le perçage, en particulier la perforation, de la portion (7) ou **en ce que** la vis de liaison (4) présente, dans la région de son extrémité avant, une ouverture frontale (20), de préférence cylindrique, qui est limitée du côté de la périphérie par des moyens de formage (21) notamment annulaires, pour faciliter le formage dans la portion (7) et/ou le perçage de celle-ci.

11. Procédé selon la revendication 10,
**caractérisé en ce que**
les moyens de formage (21) sont réalisés sous forme de tranchant annulaire, de préférence avec un dans un dans un plan, de préférence dans un plan radial rapporté à l'étendue longitudinale (L) de la vis de liaison (4), ou **en ce que** le tranchant annulaire présente un profil ondulé ou en dents de scie.
